# DEMANDE DE BREVET EUROPEEN

(11) **EP 2 809 043 A1**
(43) Date de publication de la demande: **03.12.2014**
(21) Numéro de dépôt: 14166516.6
(22) Date de dépôt: 30.04.2014
(51) Int. Cl.: H04L 29/06, H04L 29/08, H04L 12/66, H04W 4/00, H01Q 1/44, H04B 3/54

(54) **Système de gestion d'équipements urbains comprenant un premier réseau de gestion d'éclairage public, un deuxième réseau et une interface entre les deux réseaux**

(30) Priorité: 02.05.2013 FR 1354031
(71) Demandeur: Sysplug, 28000 Chartres (FR)
(72) Inventeur: Lopes, Paulino, 28110 Lucé (FR); Charbonnier, Jean-François, 28300 Saint Prest (FR)
(74) Mandataire: Gicquel, Frédéric

(57) **Abrégé**

L'invention concerne un système de gestion d'équipements urbains, incluant :
- une pluralité de mâts (M) d'éclairage public commandés par des données transmises à chacun des mâts par un réseau (2) à courant porteur selon un premier protocole ;
- au moins un deuxième réseau (8) utilisant des données de gestion selon un deuxième protocole distinct du premier protocole,

caractérisé en ce qu'il comprend des moyens d'interfaçage (42) aptes à convertir les données du deuxième protocole en données transmissibles par le réseau (2) à courant porteur selon le premier protocole, et des moyens de transmission sans fil (7) des données du deuxième réseau (8) vers les moyens d'interfaçage (42), et en ce que le premier protocole est un protocole Lonworks.

## Description

L'invention concerne le domaine de la conception et de la fabrication des équipements urbains, ainsi que leur gestion. Plus précisément, l'invention concerne un système de gestion d'équipements urbains, dont un réseau d'éclairage public géré par courant porteur et un deuxième réseau dont la gestion utilise des données d'un autre type que celui des données utilisées pour la gestion du réseau d'éclairage public.

Dans le domaine de l'invention, il est désormais connu d'utiliser des systèmes de télégestion pour la commande, le contrôle, le diagnostic et le suivi de l'éclairage public, de manière centralisée. Ces systèmes permettent des économies d'énergie, la réduction des coûts de maintenance, ainsi que l'augmentation de la fiabilité de l'éclairage extérieur.

Avec de tels systèmes, les luminaires peuvent être individuellement, et à tout moment, mis sous ou hors tension, ou encore réglés sur n'importe quel niveau de gradation. Les luminaires d'une zone spécifique peuvent bien entendu être regroupés afin d'être commandés simultanément.

La durée d'utilisation et l'état de chaque luminaire peuvent être contrôlés et tout dysfonctionnement est signalé avec la localisation exacte de la panne.

Grâce à ces fonctionnalités, les coûts de maintenance peuvent être considérablement réduits de par la durée de vie accrue des lampes et de par la planification précise des interventions de maintenance. Ces gains sont en particulier obtenus grâce à la gestion des données pertinentes et nécessaires à la planification en matière de fonctionnement.

Actuellement, les solutions d'éclairage public sont soit en courant porteur en ligne (CPL) ou en radiofréquence (RF).

Dans chaque luminaire est placé un organe de communication, couramment désigné par le terme de « noeud communicant », celui-ci étant apte à échanger des informations avec un concentrateur situé dans une armoire de répartition (soit en CPL, soit en RF). Le concentrateur donne des ordres d'allumage et d'extinction, ainsi que des consignes de variation aux noeuds communicants. En retour, les noeuds donnent une information d'état (lampe allumée ou éteinte), le niveau réel de gradation, ainsi que le statut de la lampe (en bon état de fonctionnement ou en panne).

Les concentrateurs de ces systèmes centralisent toutes les données et sont aptes à envoyer des informations, par exemple par GPRS, sur un serveur pour y être archivées. En outre, à partir d'un logiciel de télégestion installé sur un ordinateur, le gestionnaire peut contrôler à distance les luminaires.

On comprend que ces systèmes ont l'avantage de procurer un retour de fonction des installations en temps réel.

Avec le CPL, les informations sont transmises par le câble de puissance. Les protocoles de communication peuvent être « ouverts » ou « propriétaires ». Le protocole ouvert est celui utilisé par plusieurs fabricants de noeuds communicants. Il peut être interchangé sans perturbation de communication. Le protocole propriétaire est quant à lui développé par un fabricant précis et ne peut être utilisé que par celui-ci.

Les systèmes RF sont synonymes de protocole propriétaire dans la mesure où les fabricants peuvent utiliser différentes plages de fréquences, avec des codages propres. Ces solutions dans l'éclairage public ne sont pas interopérables.

Le concept de la télégestion s'est récemment développé dans les villes en allant au-delà de la télégestion de l'éclairage public, pour s'inscrire dans une approche plus large des équipements urbains. On parle alors du concept de « ville intelligente » (connue également sous le terme anglo-saxon de « smart cities »). Ces villes intelligentes développent le recours aux technologies de l'information et de la communication pour améliorer la qualité de vie de ses citoyens.

Le concept de « ville intelligente » répond à un objectif d'amélioration dans quatre domaines d'application :
- les énergies ;
- la mobilité ;
- les communications ;
- la gestion des bâtiments.

Ces domaines d'application se traduisent par des mises en oeuvre urbaines pratiques, telles que :
- la vidéo surveillance ;
- les recharges de véhicules électriques ;
- les panneaux d'information ;
- la gestion du stationnement ;
- la gestion du remplissage des conteneurs à déchets ;
- ...

Bien entendu, toutes ces applications impliquent actuellement la mise en oeuvre de réseaux dédiés, dont le déploiement et l'installation, ainsi que l'exploitation et la maintenance sont gérés de façon indépendante, le plus souvent avec des protocoles propriétaires.

Or, l'un des objectifs prioritaires des villes intelligentes est d'être au coeur des problèmes environnementaux, afin de réduire l'impact carbone. Une approche collaborative et d'engagement sur le long terme est donc recherchée, ce résultat n'étant pas atteint avec les gestions indépendantes des réseaux tels que mentionnés ci-dessus.

L'invention a donc pour objectif de pallier à cet inconvénient de l'art antérieur.

Plus précisément, l'invention a pour objectif de proposer un système de gestion d'équipement urbain incluant un système de gestion de l'éclairage public par courant porteur, qui permette la gestion centralisée selon un même protocole du système d'éclairage public en question et d'un autre réseau d'équipements utilisant ses propres données.

L'invention a également pour objectif de fournir un tel système de gestion d'équipement urbain qui soit aisément évolutif, en particulier en ce qu'il est apte à intégrer de nouveaux réseaux dans le système en place de gestion centralisée.

Ces objectifs, ainsi que d'autres qui apparaîtront par la suite, sont atteints grâce à l'invention qui a pour objet un système de gestion d'équipements urbains, incluant :
- une pluralité de mâts d'éclairage public commandés par des données transmises à chacun des mâts par un réseau à courant porteur selon un premier protocole ;
- au moins un deuxième réseau utilisant des données de gestion selon un deuxième protocole distinct du premier protocole,
caractérisé en ce qu'il comprend des moyens d'interfaçage aptes à convertir les données du deuxième protocole en données transmissibles par le réseau à courant porteur selon le premier protocole, et des moyens de transmission sans fil des données du deuxième réseau vers les moyens d'interfaçage, et en ce que le premier protocole est un protocole Lonworks.

Ainsi, grâce à l'invention, les données de gestion du deuxième réseau sont converties en données transmissibles par le réseau à courant porteur, avec celles du premier réseau, et éventuellement simultanément, ceci selon le premier protocole.

Les moyens d'interfaçage d'un système selon l'invention permettent donc de faire communiquer des applications urbaines en utilisant un seul et même réseau principal, à savoir celui servant à gérer l'éclairage public.

L'utilisation d'un système selon l'invention facilite donc l'intégration des applications urbaines pour transformer les collectivités en villes intelligentes. Cette intégration évite les travaux coûteux de génie civil qui seraient nécessaires dans l'hypothèse où chacune des applications devraient être implantées de façon indépendante. On note en effet qu'il suffit, pour connecter un nouveau réseau au système de gestion de l'éclairage public, d'installer une liaison électrique ainsi qu'une liaison de communication.

De plus, on note que le système selon l'invention permet de valoriser les réseaux d'éclairage public présents dans la plupart des communes, ceci en ajoutant à la fonction d'éclairage du réseau la fonction de réseau de communication.

En d'autres termes, le réseau d'éclairage public devient support d'un réseau de communications de données exploitables par les collectivités. Sachant que les réseaux d'éclairage publics comprennent en moyenne un luminaire tous les trente mètres, il est donc aisé d'utiliser le réseau d'éclairage public pour mailler un réseau d'informations à travers l'infrastructure du réseau d'éclairage public existant, ceci sans surcout de génie civil et sans création de lignes de communications dédiées.

On rappelle ci-après les caractéristiques d'un système et d'un protocole Lonworks (marque déposée).

La caractéristique d'un système Lonworks (marque déposée) est qu'il constitue un système ouvert et non centralisé

Dans un système Lonworks (marque déposée), chaque noeud du système est intelligent. En d'autres termes, chaque noeud est capable de prendre des décisions seul. Le système repose sur l'intégration d'une puce appelée « Neuron Chip » dans chaque noeud. Cette puce comprend un processeur qui suffit à gérer la communication. Cette puce dispose d'autres éléments, comme de la ROM (Read Only Memory) qui contient des programmes (un OS et le programme de gestion du protocole) et de la RAM, qui est indispensable pour stocker les variables de l'application qui tourne

Dans un système Lonworks (marque déposée), chaque périphérique peut directement communiquer avec le noeud de son choix

Le protocole Lonworks (marque déposée) (autrement désigné par protocole LoneTalk), est le coeur d'un système Lonworks (marque déposée). Il produit un ensemble de services de communications permettant aux applications d'un périphérique d'envoyer et de recevoir des informations d'autres périphériques sur le réseau sans avoir à connaître la topologie de celui-ci ou les noms, adresses ou encore les fonctions des périphériques. Ce protocole peut fournir la reconnaissance bout à bout des messages, leur authentification et la priorité de leur livraison.

Le protocole Lonworks (marque déposée) est conçu suivant les couches recommandés par l'organisation internationale des standards (ISO) des systèmes interconnectés ouverts (OSI).

Le protocole Lonworks (marque déposée) intègre un concept innovant de « variable réseau ». Une variable réseau est une donnée d'un composant comme la température, l'état d'un switch ou encore la position d'un déclencheur. Elle peut être de deux types :
- variable réseau d'entrée, dans le cas où une application a besoin de données concernant d'autres périphériques sur le réseau ;
- variable réseau de sortie dans le cas où un périphérique doit donner une ou des informations le concernant à un autre se trouvant sur le réseau.

Un système Lonworks (marque déposée) comprend :
- les « Neuron chip » qui sont des systèmes basés chacun sur une puce avec plusieurs unités centrales, RAM et ROM et les communications entre entrées et sorties du sous-système. La ROM contient un système d'exploitation le protocole Lonworks (marque déposée) et les entrées et sorties de la bibliothèque de fonctions. La puce a une mémoire non volatile pour configurer des données et pour les programmes d'applications, les deux étant téléchargeables à travers le réseau Lonworks (marque déposée). La puce (chip) est par conséquent l'unité centrale de communication réseau ainsi que l'unité centrale de l'application ;
- les « Tranceivers » (émetteur-récepteur) : chaque dispositif de réseau contient un tranceiver. Ces émetteurs-récepteurs fournissent une interface de communication physique entre le dispositif Lonworks (marque déposée) et le réseau Lonworks (marque déposée). Ils simplifient le développement de l'interopérabilité du dispositif Lonworks (marque déposée) et sont disponibles pour une variété de communication média et topologies, fréquences radio et fibres optiques. Ils permettent le transport des paquets pour les autres dispositifs. Tous les dispositifs connectés à une voie de transmission spécifique utilisent des transceivers compatibles.
- les modules « Lonpoint » permettant d'intégrer de nouveaux détecteurs ; le système « Lonpoint » offre une architecture système d'information répartie dans lequel chaque dispositif exécute un traitement de contrôle et peut être accédé n'importe où sur le réseau.
- les « Routeurs », utilisés pour contrôler la circulation sur le réseau et partitionner le trafic du réseau venant d'autres sections augmentant ainsi la capacité du réseau. Les objets du réseau configurent automatiquement les routeurs basés sur la topologie des réseaux. Ils permettent de scruter le réseau pour construire un transport d'information et prendre en charge le dispositif.

Selon une solution avantageuse, les moyens d'interfaçage sont associés à des mâts.

Comme indiqué précédemment, les mâts étant présents tous les trente mètres dans un réseau d'éclairage public, en plaçant des moyens d'interfaçage dans chacun des mâts, on augmente les possibilités de maillage du réseau d'éclairage public avec d'autres réseaux de collectivité.

Avantageusement, les mâts sont chacun associés à un noeud communicant relié au réseau à courant porteur.

Dans ce cas, les moyens d'interfaçage sont préférentiellement intégrés dans les noeuds communicants.

De cette façon, l'installation des moyens d'interfaçage n'impliquent pas d'intervention supplémentaire lors de la mise en place d'un système de gestion d'éclairage public par courant porteur impliquant des noeuds communicants.

Préférentiellement, les moyens d'interfaçage sont aptes à transmettre des données du réseau courant porteur au deuxième réseau.

Ainsi, la communication entre le premier et le deuxième réseau est bilatéral, permettant donc non seulement de recueillir des données du deuxième réseau en les gérant de façon centralisée, mais également de transmettre des ordres ou instructions au deuxième réseau à partir d'un central de gestion.

Selon un mode de réalisation préférentiel, le deuxième protocole est un protocole radiofréquence.

Selon une solution avantageuse, les noeuds communicants comprennent des moyens de raccordement à au moins un troisième réseau.

De cette façon, le système selon l'invention est aisément évolutif, en ce qu'il permet de raccorder aisément et rapidement un ou plusieurs réseaux supplémentaires au réseau de gestion d'éclairage public.

Selon différentes mises en oeuvre avantageuses d'un système selon l'invention, le deuxième réseau utilise des données de gestion pour l'une au moins des applications appartenant aux groupes suivants :
- stationnement ;
- remplissage de conteneurs de déchets ;
- vidéo surveillance ;
- rechargement électrique de véhicules électriques ;
- détection d'accidents ;
- bornes wifi ;
- détection de pollution ;
- systèmes audio.

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :
- la figure 1 est une représentation d'un milieu urbain incluant un système de gestion d'équipements urbains selon l'invention ;
- la figure 2 est une représentation schématique d'un système de gestion d'équipements urbains selon l'invention ;
- la figure 3 est une représentation schématique d'un noeud communicant d'un système de gestion d'équipements urbains selon l'invention.

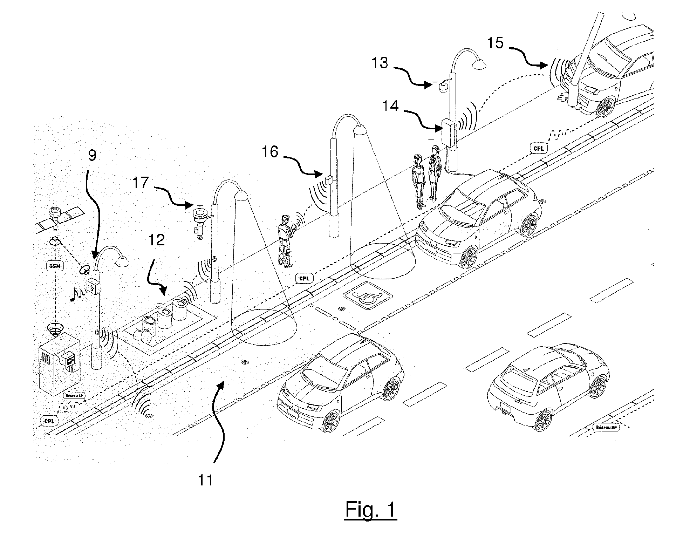

Tel qu'illustré par la figure 1, un milieu urbain susceptible d'être équipé d'un système de gestion d'équipement selon l'invention comprend un réseau de mâts M d'éclairage public alimenté par une ligne L à courant porteur. Les mâts d'éclairage sont commandés par des données transmises par le réseau 2 à courant porteur selon un premier protocole.

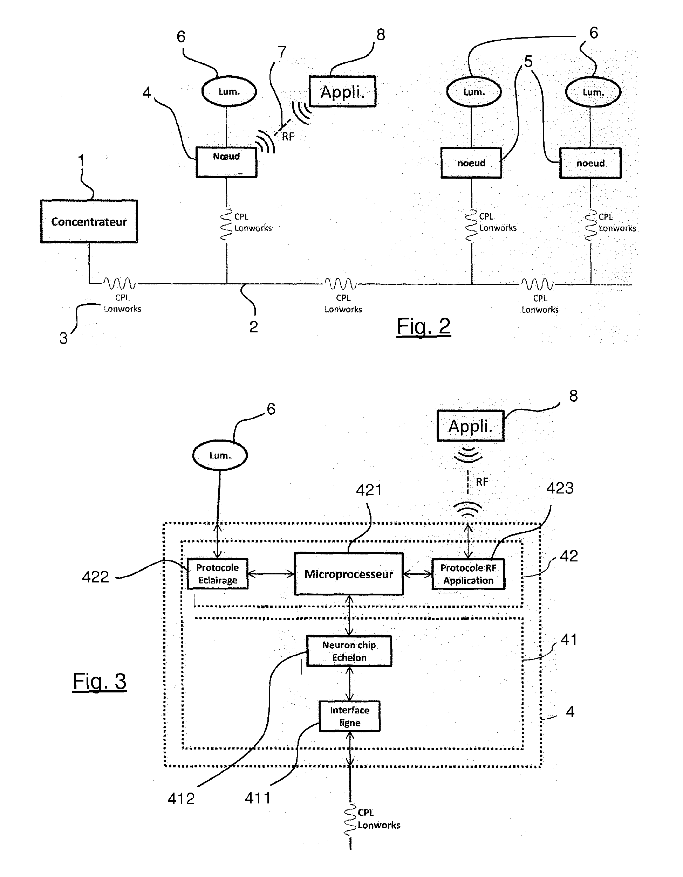

En référence à la figure 2, ce réseau met en oeuvre un concentrateur 1 situé dans une armoire de distribution électrique de l'éclairage public. Ce concentrateur est destiné à transmettre des commandes d'allumage à des noeuds communicants 4, 5, en vue de piloter les luminaires 6. Ces commandes sont transmises par courant porteur en ligne, selon un premier protocole, en l'occurrence un protocole Lonworks (marque déposée) 3, ceci en utilisant le câble du réseau 2 d'éclairage public à courant porteur (correspondant à la ligne L mentionnée en référence à la figure 1).

On note que chacun des mâts est avantageusement pourvu d'un noeud communicant 4, 5.

Ces noeuds communicants 4, 5 permettent d'actionner le luminaire 6, mais également de retourner des informations d'état du luminaire vers le concentrateur 1, tel que des informations d'état de panne, de tension, de courant...

Selon le principe de l'invention, le système de gestion d'équipement inclus au moins un deuxième réseau 8 utilisant ses propres données de gestion selon un deuxième protocole distinct du premier protocole.

Le système selon l'invention comprend en outre des moyens d'interfaçage aptes à convertir les données du deuxième protocole en données transmissibles par le réseau à courant porteur selon le premier protocole, ainsi qu'une liaison sans fil 7 entre le deuxième réseau et les moyens d'interfaçage de façon à transmettre les données du deuxième réseau vers les moyens d'interfaçage.

A cet effet, les noeuds communicants 4, 5 sont reliés par une liaison sans fil au deuxième réseau et intègrent les moyens d'interfaçage, ce qui permet de connecter des applications du deuxième réseau 8 non connectées au réseau d'éclairage public, et d'utiliser le réseau CPL selon le protocole Lonworks (marque déposée) 3 pour relayer l'information jusqu'au concentrateur 1.

Selon un mode de réalisation préférentiel de l'invention, le deuxième protocole est un protocole radiofréquence.

Ainsi, les noeuds communicants 4, 5 transforment l'information issue du protocole radiofréquence en une information véhiculée par le réseau CPL Lonworks (marque déposée) 3. De plus, les moyens d'interfaçage des noeuds communicants 4, 5 sont aptes à transmettre les données selon le protocole Lonworks (marque déposée) au deuxième réseau selon le protocole radiofréquence en utilisant des moyens de transmission sans fil, en l'occurrence la liaison sans fil 7 (et plus précisément une liaison radiofréquence selon le présent mode de réalisation).

On rappelle que la technologie Lonworks (marque déposée) met en oeuvre des modules électroniques commercialisés par la société Echelon sous la dénomination « neuron chip » conçus de façon à :
- fournir de puissants modes d'entrée/sortie et des fonctions de communication nécessaires à la conception d'un système distribué ;
- utiliser un identificateur unique, pour son adressage sur le réseau ;
- pouvoir être programmé selon un langage structuré basé sur des standards ;
- utiliser un modèle de communication indépendant du média.

Les modules électroniques (neuron chip) communiquent entre eux en s'envoyant des messages à travers le réseau. Le format de chaque message est dicté par le protocole et contient l'adresse de l'émetteur, du destinataire ainsi que, éventuellement, des informations de service.

Chaque module électronique comprend trois processeurs qui exécutent chacun une fonction spécifique, à savoir :
- un processeur d'accès aux médias qui gère la communication série sur un port de communication ;
- un processeur réseau qui réalise les services d'échange de données du protocole et exécute les routines de gestion du bloc d'entrée/sortie ;
- le processeur de l'application qui exécute le programme applicatif.

En référence à la figure 3, on décrit ci-après un noeud communicant 4 d'un système de gestion d'équipement urbain selon l'invention.

Tel qu'illustré, un tel noeud communicant 4 comprend deux parties électroniques, à savoir :
- un premier sous-ensemble 41 pour la communication par courant porteur en ligne (CPL Lonworks (marque déposée)), incluant un module électronique du type commercialisé par la société Echelon sous la dénomination « neuron chip », permettant d'exploiter les données CPL et des moyens de couplage 411 pour l'émission du signal CPL sur le réseau électrique de l'éclairage public ;
- des moyens d'interfaçage 42 des protocoles entre eux, composés d'un microprocesseur 421 permettant de gérer la communication entre les différents protocoles et le protocole CPL Lonworks (marque déposée) via le module électronique 412.

Le microprocesseur 421 traite les informations entrantes et sortantes du module électronique en charge du premier protocole 422 et du module électronique 423 en charge du protocole radiofréquence pour le deuxième réseau, et ce de manière simultanée.

A titre indicatif, les noeuds communicants 4, 5 utilisent une technologie embarquée sur une base de processeurs 32 bits. L'architecture est similaire à celle utilisée dans des téléphones mobiles incluant un ordinateur de poche (« Smartphones »). Ainsi, l'architecture utilise un système d'exploitation qui peut être personnalisé, et évolutif par des mises à jour par radiofréquence ou par câble.

En outre, des modules complémentaires peuvent être couplés par l'intermédiaire de moyens de raccordement (assimilables à des prises USB), pour greffer aux noeuds communicants différents protocoles à la demande utilisés par exemple dans au moins un troisième réseau à connecter.

En référence à la figure 1, le ou les réseaux qui sont susceptibles d'être associés à un réseau d'éclairage public dans un système selon l'invention utilise des données de gestion pour l'une au moins des applications appartenant au groupe suivant :
- le stationnement 11 (gestion d'informations sur les places libres/occupées, avec mise en oeuvre d'un capteur à chaque place de stationnement) ;
- le remplissage de conteneurs de déchets 12 (avec un système de détection de remplissage) ;
- la vidéosurveillance 13 ;
- rechargement électrique de véhicules électriques 14 (taux d'utilisation, quantité d'électricité fournie...) ;
- la détection d'accident 15 (par exemple en plaçant des capteurs de chocs sur les mâts d'éclairage) ;
- la gestion de bornes Wifi 16 ;
- la détection de pollution 17;
- un système audio 18, pour la diffusion d'annonces, de musique...

## Revendications

1. Système de gestion d'équipements urbains, incluant :
- une pluralité de mâts (M) d'éclairage public commandés par des données transmises à chacun des mâts par un réseau (2) à courant porteur selon un premier protocole ;
- au moins un deuxième réseau (8) utilisant des données de gestion selon un deuxième protocole distinct du premier protocole,
**caractérisé en ce qu'**il comprend des moyens d'interfaçage (42) aptes à convertir les données du deuxième protocole en données transmissibles par le réseau (2) à courant porteur selon le premier protocole, et des moyens de transmission sans fil (7) des données du deuxième réseau (8) vers les moyens d'interfaçage (42), et **en ce que** le premier protocole est un protocole Lonworks.

2. Système de gestion d'équipements urbains selon la revendication 1, **caractérisé en ce que** les moyens d'interfaçage (42) sont associés à des mâts (M).

3. Système de gestion d'équipements urbains selon la revendication 1, **caractérisé en ce que** les mâts (M) sont chacun associés à un noeud communicant (4), (5) relié au réseau (2) à courant porteur.

4. Système de gestion d'équipements urbains selon les revendications 2 et 3, **caractérisé en ce que** les moyens d'interfaçage (42) sont intégrés dans les noeuds communicants (4), (5).

5. Système de gestion d'équipements urbains selon la revendication 1, **caractérisé en ce que** les moyens d'interfaçage (42) sont aptes à transmettre des données du réseau (2) à courant porteur au deuxième réseau.

6. Système de gestion d'équipements urbains selon l'une quelconque des revendications 1 à 5, **caractérisé en ce que** le deuxième protocole est un protocole radiofréquence.

7. Système de gestion d'équipements urbains selon l'une quelconque des revendications 1 à 6, **caractérisé en ce que** les noeuds communicants (4), (5) comprennent des moyens de raccordement à au moins un troisième réseau.

8. Système de gestion d'équipements urbains selon l'une quelconque des revendications 1 à 7, **caractérisé en ce que** le deuxième réseau (8) utilise des données de gestion pour l'une au moins des applications appartenant au groupe suivant :
- stationnement ;
- remplissage de conteneurs de déchets ;
- vidéosurveillance ;
- rechargement électrique de véhicules électriques ;
- détection d'accident ;
- borne Wifi ;
- détection de pollution ;
- système audio.
